# EUROPEAN PATENT APPLICATION

(11) **EP 4 390 350 A1**
(43) Date of publication of application: **26.06.2024**
(21) Application number: 22216959.1
(22) Date of filing: 28.12.2022
(51) Int. Cl.: G01K 11/16

(54) **ENERGETICALLY AUTONOMOUS THERMOCHORMIC SMART TAGS**

(30) Priority: 21.12.2022 PT 2022118420
(71) Applicant: NOS Inovação, S.A., 4460-191 Senhora da Hora (PT); UNIVERSIDADE NOVA DE LISBOA, 1099-085 Lisboa (PT)
(72) Inventor: NUNES FERREIRA, JOÃO MIGUEL, 4460-191 SENHORA DA HORA (PT); PALMA DA SILVA, CARLOS ANDRÉ, 4460-191 SENHORA DA HORA (PT); COUTINHO DE SOUSA, JOANA, 4460-191 SENHORA DA HORA (PT); FORTUNA NEVES FERNANDES DA CUNHA, INÊS ISABEL, 1100-094 LISBOA (PT); NUNES PEREIRA, LUIS MIGUEL, 2820-095 CHARNECA DA CAPARICA (PT); TABORDA FÉLIX LOCHMATTER, LUNA ILDA, 2725-482 SINTRA (PT); FERRÃO DE PAIVA MARTINS, RODRIGO, 2820-414 CHARNECA DA CAPARICA (PT); PINTO SEQUEIRA DOS SANTOS GRAÇA, JORGE FILIPE, 4460-191 SENHORA DA HORA (PT)
(74) Representative: Pereira da Cruz, Joao

(57) **Abstract**

The present disclosure is directed to a composite comprising at least one coating on at least a portion of a first surface, and at least one leuco dye on at least a portion of a second surface, wherein the coating comprises at least one binder and at least one insulating material, said at least one insulating material, preferably in the form of particles, being at a ratio from 85:15 to 98:2 (w/w) and having a thickness from 0.09 mm to 0.8 mm. Further articles comprising the composite are disclosed. Methods of coating a composite and methods for determining if an article has been exposed to a preselected temperature threshold, are further disclosed.

## Description

### FIELD OF THE INVENTION

The present disclosure, in some embodiments thereof, relates to thermal monitoring labels.

### BACKGROUND OF THE INVENTION

Set-top-boxes (STBs) contribute significantly to energy consumption of the common household. These devices are usually ignored and unproperly placed in confined spaces. Poor positioning of STBs can obstruct heat dissipation, leading to their overheating and endangering correct functioning and long-term operation. Monitoring the thermal conditioning of the device is critical to ensure its standard performa nce.

Although operators have information on the device's temperature remotely, monitoring thousands of clients requires a higher level of customer support and software that is not viable. In alternative, thermal monitoring could rely on the consumer end by developing a retrofitting solution that can be integrated in the STB to serve such purpose and without adding cost.

Patent EP3945851A1 discloses a temperature sensor, and methods of making and using such a temperature sensor, whereby the temperature sensor includes a reversible thermochromic color-changing system having a dye, a developer, and a solvent. Upon exposure to a preselected temperature threshold, association or disassociation of the dye and the developer results in a visible color change. Further, the color-changing system includes a color-memory property which facilitates retention of the color change to effectively record exposure to the temperature threshold.

Patent US11435293B2 discloses a dual-function heat indicator for monitoring two or more modes of heat exposure. A manufacturing process for the dual-function heat indicator is also described. Dual-function heat indicators as described may be useful for monitoring the exposure of host products, with which the dual-function heat indicators may be associated, to cumulative ambient heat exposure and to a peak ambient heat exposure, and for other purposes.

There is still a need for a thermal indicator that is capable of not only provide a visual indication of temperature change by colour activation but also distinguishing prolonged from punctual heating, thus alerting a user of potentially harmful situations for a product.

### SUMMARY OF THE INVENTION

In one aspect of the disclosure, there is provided a composite comprising at least one coating on at least a portion of a first surface, and at least one leuco dye on at least a portion of a second surface, wherein the coating comprises at least one binder and at least one insulating material, the at least one insulating material, preferably in the form of particles, being at a ratio from 85:15 to 98:2 (w/w) and having a thickness from 0.09 mm to 0.8 mm.

In a further embodiment, the composite comprises at least two coatings on at least two portions of the first surface, preferably positioned in a pattern, wherein the at least two coatings have a different thickness between them, preferably wherein the thickness of the first coating is at least 0.09 mm thicker than the second coating.

In a further embodiment, the composite comprises at least two leuco dyes on at least two portions of the second surface, preferably positioned in a pattern, each of the at least two leuco dyes comprising a different transition temperature, the temperature of the first leuco dye being at least 4 °C higher than the second leuco dye.

In a further embodiment, the leuco dye reversibly changes between a visibly colored state and a substantially colorless state and comprises a transition temperature from 26 °C to 60 °C, preferably from 27°C to 50 °C.

In a further embodiment, the binder is selected from the list: an acrylic polymer, a polyurethane, a polyamide, a rubber resin, a modified resin, a hydrocarbon resin, an alkyd, an organosilicon polymer, a cellulose derivative, or any combination thereof.

In a further embodiment, the insulating material is in the form of particles and is selected from the list: silica nanoparticles, alumina nanoparticles, titania nanoparticles, cork particles, wood particles, polystyrene, cellulose nanoparticles, cellulose microfibers, cellulose nanofibers, natural fibers, or any combination thereof.

In a further embodiment, the composite is selected from the list: paper, wood, fiber, metal, glass, polymeric substrate, ceramic, plastic, thermoplastic materials, thermoset materials, textile, preferably paper, or any combination thereof.

In another aspect of the disclosure, there is provided a temperature sensor comprising the composite according to the present disclosure.

In another aspect of the disclosure, there is provided a method for coating a composite according to the present disclosure, comprising the steps of: a) applying at least a first polymeric mask with a desired pattern on the first surface; b) contacting the first surface with at least one binder and at least one insulating material, preferably in the form of particles at a ratio from 85:15 to 98:2 (w/w); c) applying at least a first polymeric mask with a desired pattern on the second surface; and d) contacting the second surface with at least one leuco dye.

In a further embodiment, the contacting from steps b) and/or d) comprises blade coating, spraying, spreading, casting, rolling, adhering, curing, printing, or any combination thereof.

In another aspect of the disclosure, there is provided a method for determining if an article has been exposed to a preselected temperature threshold, comprising: a) placing the composite according to the present disclosure, on a surface of the article; and b) visual detecting a color shift, preferably a gradual color shift, or absence of a color change.

In a further embodiment, the visual detecting a color shift indicates that the article was exposed to the temperature threshold, and absence of a color change indicates that the article was not exposed to the temperature threshold.

In another aspect of the disclosure, there is provided an article comprising the composite according to the present disclosure, wherein the article is an electronic device, a house appliance, a lens, a package, a cable, a charger, a wall, a window, or any combination thereof.

In another aspect of the disclosure, there is provided a use of the composite according to the present disclosure, preferably the temperature sensor of the present disclosure or the article of the present disclosure for monitoring superficial temperature of a surface.

In another aspect of the disclosure, there is provided a use of the composite according to the present disclosure, preferably the temperature sensor of the present disclosure or the article of the present disclosure in electronic devices, house appliances, lenses, packages, cables, chargers, walls and windows.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.
Figures 1A-C present designed PEN masks for doctor blade coating: mask for first two layers (Figure 1A); mask for third and fourth layer (Figure 1B) and mask for final two layers (Figure 1C);
Figures 2A-C are a schematic representation and sticker paper masks for the deposition of the TC inks, according to their transition temperatures, for 27°C (Figure 2A), 31°C (Figure 2B) and 47°C (Figure 2C);
Figures 3A-C are a schematic representation of a non-limiting example of a design for a black cover cut (Figure 3A), cover cut (Figure 3B) and final assembled prototype (Figure 3C);
Figure 4 is optical stereo microscope image of samples with PDMS/silica (PS5) dispersion;
Figure 5 is a graph presenting average thickness of PS5 samples with the number of coating passages;
Figure 6 presents graphs of stability of resulting thermal gradients of PS5 dispersion;
Figure 7 is optical stereo microscope image of PDMS/cork (PCo10) dispersion;
Figure 8 is a graph presenting average thickness of PCo10 samples in function of the number of passages;

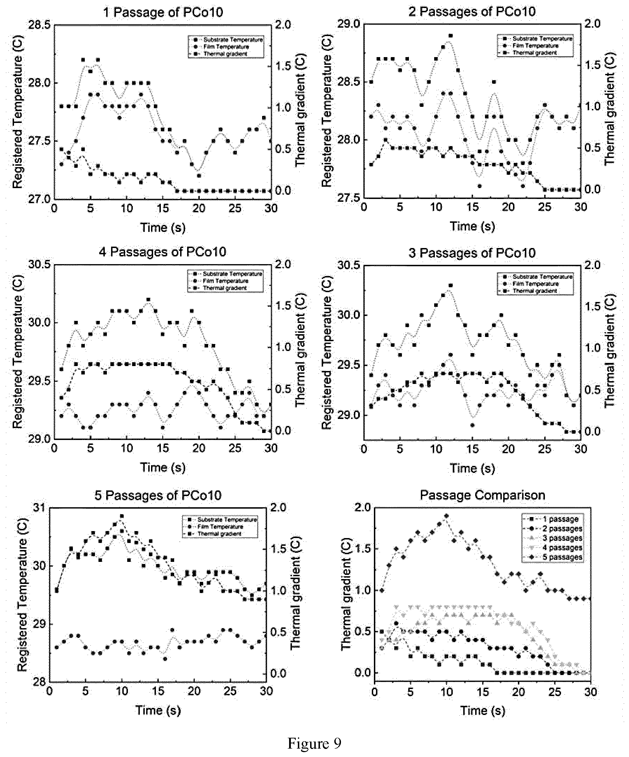

Figure 9 presents graphs of stability of resulting thermal gradients of PCo10 dispersion;
Figure 10 is a schematic representation of the TCST's production process, wherein 1°: logo inkjet printing with home office inkjet printer, 2°: sequential deposition of thermal insulator dispersion using doctor blade coating technique on the opposite side, 3°: deposition of the TC layer on the patterned logo, 4°: laser cut of the cover on black paper, 5°: assembly of the sample with the black cover and final prototype;
Figure 11 is a schematic representation of the layout of the deposited amounts of insulating dispersion counted by number of layers deposited by Doctor Blade Coating;
Figure 12 is an image of the resulting film of the deposition of PCo10 following the prototype design;
Figures 13A-C present pictures of the black and white prototype's temporal evolution on the heating plate at 30 °C, after 8 seconds of heating (Figure 13A), 16 seconds of heating (Figure 13B) and 24 seconds of heating (Figure 13C); and
Figures 14A-C present pictures of the coloured (top row) and black-and-white (bottom row) prototype's temporal evolution on the heating plate at 60 °C, after 1 minute of heating (Figure 14A), 2 minutes of heating (Figure 14B) and 3 minutes of heating (Figure 14C).

### DETAILED DESCRIPTION OF THE INVENTION

According to some embodiments, the present disclosure provides a composite comprising at least one coating on at least a portion of a first surface, and at least one leuco dye on at least a portion of a second surface. In some embodiments, the coating comprises at least one binder and at least one insulating material preferably in the form of particles.

In some embodiments, a composite as described herein is a temperature sensor.

The present disclosure is based, in part, on the finding that a coating as described herein, on on at least a portion of a first surface, is a thermal insulator coating capable of slowing down the colour transition of the leuco dye layer, patterned on a second furface on the opposite side of the composite.

The present disclosure is based, in part, on the finding that a coating as described herein can induce a stable thermal gradient, guaranteeing a gradual activation of the leuco dye. According to the present disclosure, the use of just a binder was not able to create a thermal gradient. The present disclosure is based, in part, on the finding that a mixture of a binder and an insulating material preferably in the form of particles as described herein, are able to form a coating in the form of a uniform film, comprising a thermal gradient, and desired stability over time. The present disclosure is based, in part, on the finding that for the activation of the leuco dye, it is important that the coating is uniform, so that the heat reaches the leuco dye layer uniformly.

The present disclosure is based, in part, on the finding that a composite as described herein, is capable of monitoring a superficial temperature of a surface, through a colour change activated by released heat from the surface.

The present disclosure is based, in part, on the findinf that the insulating material being in the form of particles, is a simple and affordable way of transferring materials that have the desired characteristics to a composite, without being processed. It should be understood that according to the present disclosure, other alternatives are possible, such as using precursors that can be converted into active materials (insulating materials) through thermal, chemical or photothermal activation, depending on whether it is a polymer, oxide, metal. Non-limiting example includes the use of an aluminum-based salt incorporated into an ink suitable for inkjet printing, that after printing on a substrate (glass, silicon, plastic) can be converted in-situ into alumina through photothermal activation (UV + 150°C).

As used herein, the term "binder" refers to any film-forming polymeric material which can be used to make coatings. The polymeric material can be either organic or inorganic. Organic binders have a carbon-containing backbone and inorganic binders generally have a silicone backbone. Organic binders are made up of organic monomers and oligomers from which the binders generally derive their names. Examples of these would be acrylic, epoxy, urethane, melamine, and so forth. Binders include epoxy-based resin binders such as a water reducible epoxy-polyamide system (for organic polymeric materials) or non epoxy-based resin binders such as urethanes, ureas, acrylates, alkyds, melamines, polyesters, vinyls, vinyl esters, silicones, siloxanes, silicates, sulfides, sulfones, epoxy novilacs, epoxy phenolics, drying oils, and hydrocarbon polymers, and the like. Non-limiting examples include poly(methyl methacrylate) (PMMA), poly(vinyl alcohol) (PVA), polyacrylate, polysiloxane, polydimethylsiloxane (PDMS), poly(ethyleneoxide) (PEO).

According to the present disclosure "binder" refers to any material capable of aiding in the dispersion stability, film formation, and/or adhesion to a desired composite and/or substrate. As used herein, "dispersion stability" refers to the ability of a dispersion to resist change in its properties over time. In some embodiments, the binder is selected from an acrylic polymer, a polyurethane, a polyamide, a rubber resin, a modified resin, a hydrocarbon resin, an alkyd, an organosilicon polymer, a cellulose derivative, or any combination thereof.

As used herein, the term "insulating material" refers to a material that prevents or reduces various forms of heat transfer between different surfaces. In some embodiments, the insulating material in the form of particles is selected from silica nanoparticles, alumina nanoparticles, titania nanoparticles, cork particles, wood particles, polystyrene, cellulose nanoparticles, cellulose microfibers, cellulose nanofibers, natural fibers, or any combination thereof. The present disclosure is based, in part, on the finding that an insulating material as described herein present thermal insulating behavior, allowing for distinguishing a punctual heating of a surface from a continuous heating.

In some embodiments, the coating comprises at least one binder and at least one insulating material in the form of particles at a ratio between 85:15 and 98:2 (w/w), between 85:15 and 98:2 (w/w), between 90:10 and 98:2 (w/w), between 92:8 and 98:2 (w/w), or between 93:7 and 98:2 (w/w), including any range therebetween. Each possibility represents a separate embodiment of the present disclosure.

In some embodiments, the coating comprises polydimethylsiloxane (PDMS), and silica nanoparticlesat a ratio between 93:7 and 98:2 (w/w). In some embodiments, the coating comprises PDMS and cork microparticles at a ratio between 85:15 and 98:2 (w/w). The present disclosure is based, in part, on the finding that the ratio between at least one binder and at least one insulating material in the form of particles as presented herein, is the optimal ratio to be able to form the desired uniform coating on a substrate. The present disclosure is based on the finding that increasing the amount of insulating material in the form of particles leads to an increase in the viscosity and a uniform coating is not obtained.

In some embodiments, the coating comprises a thickness between 0.09 mm and 0.8 mm, between 0.1 mm and 0.8 mm, between 0.2 mm and 0.8 mm, between 0.5 mm and 0.8 mm, between 0.09 mm and 0.6 mm, between 0.1 mm and 0.6 mm, between 0.2 mm and 0.6 mm, or between 0.5 mm and 0.6 mm, including any range therebetween. Each possibility represents a separate embodiment of the present disclosure. The present disclosure is based, in part, on the finding that a coating according to the present disclosure comprising a thickness of less than 0.09 mm doesn't present a detectable thermal gradient.

In some embodiments, the composite comprises at least two coatings on at least two portions of the first surface, wherein each of the at least two coatings comprises a different thickness, and a first thickness is at least 0.09 mm thicker than a second thickness. The present disclosure is based, in part, on the finding that a tailored thermal gradient can be obtained between the coating and the substrate depending on the coating thickness.

The present disclosure is based, in part, on the finding that a coating (film) according to the present disclosure (e.g. PDMS/silica) has a minimum thickness of 0.09 mm (minimum thickness measured on the film obtained from 1 doctor blade pass) in order to maintain a thermal gradient for at least 3 seconds. The present disclosure is based, in part, on the finding that a coating (film) according to the present disclosure (e.g. PDMS/cork (10wt.%)) must have a minimum thickness of 0.11 mm (minimum thickness measured on the film obtained from 1 doctor blade pass) in order to maintain the thermal gradient for 13 seconds. The present disclosure is based, in part, on the finding that each layer addition (increase in thickness by at least 0.09 mm) will increase the thermal gradient and the time it is maintained.

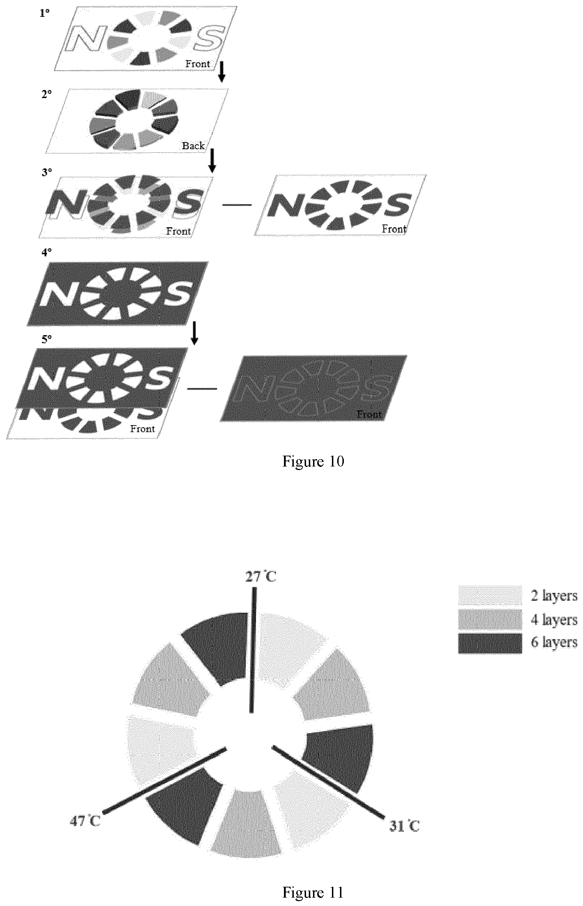

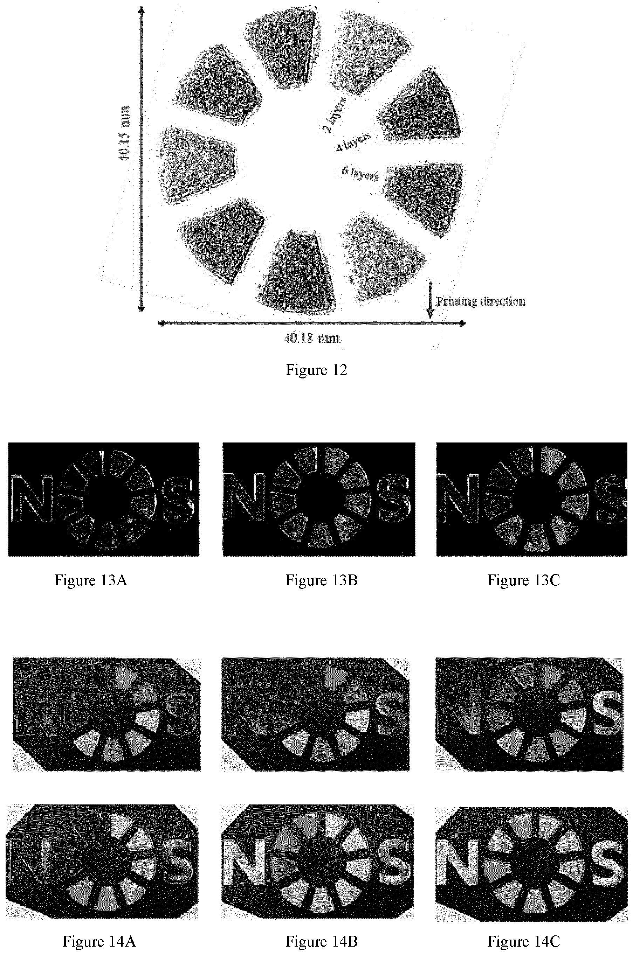

In some embodiments, the composite comprises at least three coatings with a different thickness. According to the present disclosure, a number of layers of the coating can be chosen so that the three coatings with different thickness are able to generate different and distinguishable thermal gradients, enabling a gradual colour change of leuco dye layer when continuously heated above its transition temperature, as described in Figure 11 and Figure 12.

The terms, film/films and layer/layers are used herein interchangeably. As used herein, the term "coating" refers to the combined layers disposed over the substrate, excluding the substrate, while the term "substrate" refers to the part of the composite structure supporting the disposed layer/coating. In some embodiments, the terms "substrate" and "composite" are used herein interchangeably.

In some embodiments, the terms "coating", "layer", "film" or as used herein interchangeably, refer to a substantially uniform-thickness of a substantially homogeneous substance or mixture of substances.

The term "coating" refers to a polymeric material (organic or inorganic) that can be applied either as a liquid or solid to a substrate to form a polymeric film. A coating according to the present disclosure comprises a binder, a solvent, an additive, an insulating material, or any combination thereof.

According to the present disclosure, the coating can be designed to support an image or a pattern, on different portions of the substrate.

The chemistry and morphological properties of the layers, e.g., disposed on top of the substrate, are discussed hereinbelow in the Example section. Moreover, according to one embodiment of the present disclosure, the layer is homogenized deposited on a surface.

In some embodiments, the composite comprises at least two leuco dye on at least two portions of the second surface, each of the at least two leuco dye comprising a different transition temperature, and a first temperature being at least 4 °C higher than a second temperature.

In some embodiments, the composite comprises at least two, at least three, at least four, or at least five leuco dye, each of the leuyco dye comprising a different transition temperature. In some embodiments, each of the leuco dye comprises a transition temperature selected from: 25 °C, 30 °C, 40 °C, 50 °C and 60 °C.

In some embodiments, the at least one leuco dye reversibly changes between a visibly colored state and a substantially colorless state and comprises a transition temperature from 26 °C to 60 °C, preferably from 27 °C to 50 °C.

"Leuco dyes" are well known in the art as dyes which can switch between two chemical forms. Leuco dye-based reversible thermochromic inks change from a colored state to a clear or slightly colored state as a result of increasing the temperature to above the activation temperature of the ink. The color returns upon cooling. A wide range of leuco dye-based thermochromic inks are available, and according to the present disclosure, the choice of comercially available dyes was made based on their transition temperature, that is essencial to obtain the desired tecnical effect. A composite according to the present disclosre, can be used, for example, in detecting excessive heating of electrical devices, therefore a leuco dye with a low temperature or a temperature bellow 25°C would not be usefull in this context.

In some embodiments, the composite is selected from paper, wood, fiber, metal, glass, polymeric substrate, ceramic, plastic, thermoplastic materials, thermoset materials, textile, preferably paper. The present disclosure is based, in part, on the finding that paper is a suitable substrate allowing for a deposit of a homogeneous coating. Paper has the advantage of being a low-cost, with wide availability and sustainability substrate. Suitable paper can be chosen regarding its properties such as density, opaqueness, ink absorption, depending on the application of the substrate.

According to some embodiments, the present disclosure provides a method for coating a composite as described hereinabove. In some embodiments, the method comprises the steps of: a) applying at least a first polymeric mask with a desired pattern on a first surface; b) contacting the first surface with at least one binder and at least one insulating material in the form of particles at a ratio between 85:15 and 98:2 (w/w); c) applying at least a first polymeric mask with a desired pattern on the second surface; and c) contacting a second surface with at least one leuco dye.

The present disclosure is based, in part, on the finding that step b) can be repeated a desired number of times, obtaining different coating layers, allowing for designing a tailored thermal gradient between the coating and the composite, with a dependency of film's thickness, defined by the number of coating steps (step b). Thicker thermal insulating coatings (films) induce a higher thermal gradient, which translates into a slower colour transition of the leuco dye for a given transition temperature. The tecnical effect associated is that activation of the leuco dye only occurs when there is a continuous heating of the sustrate.

In some embodiments, the polymeric mask is a polyethylene naphthalate (PEN) mask with a defined pattern cut.

In some embodiments, contacting is selected from the group comprising: blade coating spraying, spreading, casting, rolling, adhering, curing, or any combination thereof.

According to some embodiments, the present disclosure provides a method for determining if an article has been exposed to a preselected temperature threshold, comprising: a) placing a composite as described hereinabove, on a surface of the article; and b) visually observing the composite.

In some embodiments, visually observing the composite comprises visual detection of a color shift or absence of a color change, wherein a gradual color shift indicates that the article was exposed to the temperature threshold, and absence of a color change indicates that the article was not exposed to the temperature threshold.

According to some embodiments, the present disclosure provides an article comprising the composite as described hereinabove. Suitable articles according to the present disclosure include articles comprising a surface which can show a different temperature, preferably an article which prolonged heating can compromisse its behaviour or damage its properties. Non-limitting examples of articles according to the present disclosure include electronic devices, house appliances, lenses, packages, cables, chargers, walls or windows.

According to some embodiments, the present disclosure provides a use of the composite as described hereinabove, for monitoring superficial temperature of a surface. In some embodiments, the surface refers to any surface of a object or device which can show a different temperature, preferably an object or device which prolonged heating can compromisse its behaviour or damage its properties.

According to some embodiments, the present disclosure provides a use of the composite as described hereinabove, as a temperature sensor in a object or device, preferably electronic devices, house appliances, lenses, packages, cables, chargers, walls and windows.

The present disclosure is based, in part, on the production of substrates as described herein, based on low-cost printing/coating techniques compatible with thermally insulating sustainable materials and paper substrates, creating a "greener" and user-friendly process that can easily be scalable to industrial level. Since the simplicity of the techniques makes customization accessible, the overall production process is designed to be a cost-effective approach to the development of temperature sensors, easing its integration in an object or article as described hereinabove (e.g. electronic device).

As used herein the term "about" refers to ± 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

As used herein, the singular form "a", "an" and "the" include plural references unless the context clearly dictates otherwise. For example, the term "a valve" or "at least one valve" may include a plurality of valves, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

### EXAMPLES

Reference is now made to the following examples, which together with the above descriptions illustrate some embodiments of the disclosure in a non-limiting fashion.

### Materials and methods

This section is divided into the preparation and study of thermal insulating dispersions, regarding their printing/coating quality on paper substrates and resulting thermal gradient, and the production of the paper thermochromic smart tag (TCST) is described.

### Preparation and deposition of thermally insulating dispersions on paper

### Formulation of the thermally insulating dispersions

As listed in

Table 1 and Table 2, distinct thermally insulating dispersions were designed and formulated by mixing a binder solution (cellulose derivative or PDMS) with different amounts of insulating functional particles: Microcrystalline cellulose (MCC) (Sigma-Aldrich, particle size 20 µm), silica nanopowder (Sigma-Aldrich, average 12 nm, 99.8%), and cork waste microparticles (microparticle size < 200 µm).

The cork waste was obtained from natural cork stoppers from various wine brands that were collected and grinded using a domestic mixer grinder. The recycled granulates were then sieved to obtain a powder with a size inferior to 200 µm.

**Table 1 - Summary of all the developed cellulose derivate-based thermal insulating dispersions.**

| **Sample name** | **Binder** | **Solvent** | **Binder: solvent weight ratio %(w/w)** | **Insulating particles** | **Insulating particles: binder solution weight ratio %(w/w)** | **Printing/coating technique** |
|---|---|---|---|---|---|---|
| CM5 | CMC | Water | 3:97 | MCC | 5:95 | Screen printing |
| CM10 | | | | MCC | 10:90 | |
| CS5 | | | | SNP | 5:95 | |
| CCo5 | | | | Cork | 5:95 | |
| SP_EM10 | EC | DAA | 5:95 | MCC | 10:90 | Screen printing |
| DB_EM10 | | | | MCC | 10:90 | Doctor blade coating |
| SP_ES5 | | | | SNP | 5:95 | Screen printing |
| DB_ES55 | | | | SNP | 5:95 | Doctor blade coating |
| SP_ECo5 | | | | Cork | 5:95 | Screen printing |
| DB_ECo5 | | | | Cork | 5:95 | Doctor blade coating |
| SP_ECo10 | | | | Cork | 10:90 | Screen-printing |
| DB_ECo10 | | | | Cork | 10:90 | Doctor blade coating |

**Table 2 - Summary of all the developed PDMS-based thermal insulating dispersions**

| **Sample name** | **Binder** | **PDMS:curing agent weight ratio %(w/w)** | **Insulating particles** | **Insulating particles:Binder weight ratio %(w/w)** | **Printing/coating technique** |
|---|---|---|---|---|---|
| PS5 | PDMS | 5:1 | SNP | 5:95 | Doctor blade coating |
| PCo10 | | | Cork | 10:90 | |

### Cellulose derivative/ insulating material system

An aqueous solution of CMC (Sigma-Aldrich, M_{w} ≈ 250000) was prepared at a weight ratio of 3:97 %(w/w). The dispersion was then left to agitate vigorously for two hours until it became viscous and homogeneous. In alternative to water-based systems, a solution of EC (Sigma-Aldrich, 5 % in toluene/ethanol 80:20(lit.), extent of labelling: 48 % ethoxyl) was prepared with weight ratio 5:95 %(w/w) using diacetone alcohol (DAA) (Sigma-Aldrich, 99%) as solvent. The dispersion was left to agitate overnight, until acquiring a transparent viscous appearance. Afterwards, the insulating functional particles were added to the binder solution of CMC or EC, in the proportions mentioned in

Table 1, and left to agitate for 1 hour at room temperature conditions at 100 rpm to ensure a reasonable dispersion of the functional material within the cellulosic matrix.

### PDMS/ insulating material system

PDMS (SYLGARD 184) at a 1:5 w/w ratio curing agent to the elastomer was weighted and mixed manually with a spatula. Insulating particles were mixed in the weight ratio presented in Table 2. The mixture was manually and slowly agitated for approximately 1 minute due to the high viscosity of the PDMS solution. The dispersion goes through a vacuum chamber for 30 minutes (15 min with the vacuum pump on, 15 min with the vacuum pump off) to remove the air bubbles from the solution.

### Deposition of the formulated thermally insulating dispersions

The deposition of the thermal insulating dispersions was performed on office paper with two different grammages: 80 g/m² (Discovery^{™}) and 120 g/m² (The Navigator Company ^{™}). The screen printing trials were carried out with a polyester screen mesh with the following features: mesh model: 77-55; mesh count: 190 mesh/inch; aperture: 81 µm; thread diameter: 55 µm; opening: 30%; thickness: 88-97 µm. After the process, the samples were left to dry during 5 minutes at ambient conditions. Samples were prepared from 1 to 5 passages, leaving the sample to air dry for approximately 1 minutes after each printing step. All depositions performed with doctor blade coating (RK Print Coat Instruments, Model K101) were done at speed 2 with the roll 2 (close wound, wire diameter 0.15 mm) of the equipment. The coating process was done with the aid of a polyethylene naphthalate (PEN) mask in order to ensure the deposition of a defined pattern. The mask was designed in Adobe Illustrator Software and cut with a CO₂ laser cutter (Laser System VLS 3.50, Universal Laser System) for the thermal insulating dispersion study, consisting of four different zones equally distanced, with the same height (20.5 mm) and different widths (1.5, 2.25, 3.5, and 5 mm).

### Analysis of the insulating layers on paper

The thermal analysis of the samples was done using the thermal camera and the PYROSOFT VIEWER software. First, a heating plate was heated to 30 °C for 15 minutes. The sample was then placed on top of the heating plate, and the camera recorded the superficial temperature until thermal equilibrium was reached. The visual uniformity of the samples was evaluated using an optical stereo microscope (Leica M80). The thickness of the thick samples composed of PDMS were measured using the electronic outside micrometre, and performing 3 measurements throughout the length.

### Design and fabrication of the thermochromic smart tag on paper

The prototype was produced in five different steps, involving logo printing, paper coating with thermal insulating layers, patterning of the TC inks, and final assembly for an aesthetic functional design.

### Logo printing

The logo was printed on office paper (The Navigator Company^{™}) using a conventional inkjet printer (Canon, ImageRUNNER ADVANCE, C5540i) to create an assigned base for the TC ink. The printing design was done in black and white, and coloured to create different aesthetic impacts.

### Thermal barrier deposition

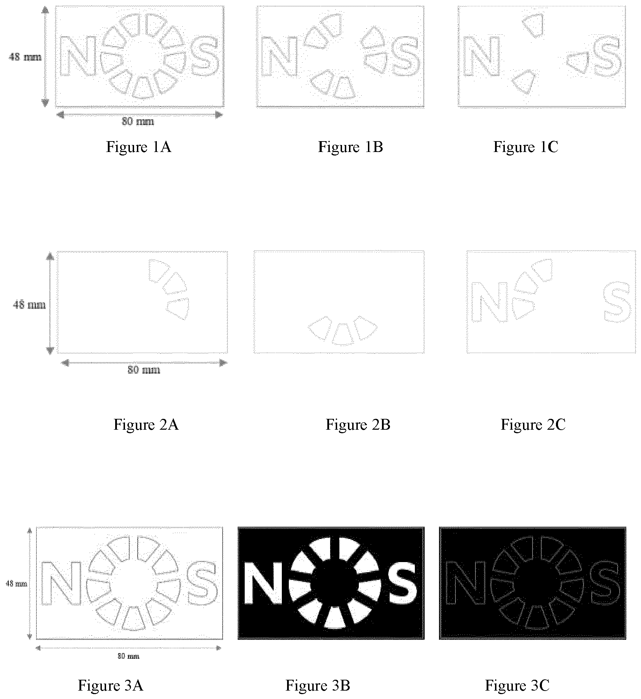

Dispersion PCo10 was deposited by doctor blade coating, assisted with PEN masks, on the opposite side of the paper with the printed logo. Figures 1A-C illustrate the design of the three laser-cut PEN masks used, which were set to 80 mm in width and 48 mm in height to better suit the size of the STB. These masks were used for selective and sequential coating of the thermal insulating layers.

In detail, doctor blade applicator's bed was previously heated at 85 °C for 5 min, and then the paper substrate was secured to the bed with duct tape. The mask from **Erro! A origem da referência não foi encontrada.**A was fixated on top of the paper substrate with duct tape, ensuring maximum visual proximity. The insulating dispersion was placed on top of the upper edge of the mask, and, with the aid of rod 2 at speed 2, the pattern was transferred to the substrate and left to curate for 3 minutes, to create a more solid base for the following deposition. For the deposition of the second layer, the dispersion is placed again on the upper edge of the mask, and the same process is repeated. The following 2 depositions are repeated with the mask from 1B, which is placed on top of the previous mask with duct tape. The deposition of the final two layers required a third mask (Figure 1C), which is placed on top of the previous masks with duct tape. Finally, all masks are carefully removed and the paper coated substrate is cured directly on the heating plate for 1 h at 85 °C.

### TC ink deposition

Water-based, screen-printable commercial TC leuco-dye based inks, with different activation temperatures of 27 °C, 31 °C and 47 °C, were used (SFXC Thermochromic black screen printing ink - temperature trial pack, THERMPBSI).

Previously to the deposition of the TC ink, an ultraviolet (UV) treatment (Novascan PSD-UV with Ozone Elimination System) of 30 minutes was performed on the paper side with the printed logo to promote a better coating of the TC pattern. As depicted in Figures 2A-C, different masks were designed to pattern the regions intended to define the TC layers with different transition temperatures. The mask was attached to the substrate and the ink was manually spread onto it with a glass coverslip. After the deposition, the mask was removed and the ink was dried at 50 °C for 5 minutes. Sequential deposition of different TC inks required a UV treatment of 15 minutes between each deposition, to ensure that the properties of the UV treatment were kept throughout the handling of the sample.

### Final assembling

For the final step of the schematic shown in Figure 10 a black cover was placed on top of the side where the logo was printed. For this effect, an outline of the logo was designed (**Erro! A origem da referência não foi encontrada.**A) and a black paper was laser-cut with this design (**Erro! A origem da referência não foi encontrada.**B). Finally, the patterned black cover was secured on top of the paper substrate with the aid of glue on the four corners. **Erro! A origem da referência não foi encontrada.**C shows a schematic of the final prototype in an inactive state.

### EXAMPLE 1

### THERMAL ANALYSIS OF THERMAL INSULATING FILMS

Printing/coating trials were performed with the dispersions of the active materials as described in Table 1 and Table 2. Screen-printing and doctor blade coating were the techniques chosen to perform the trials, as they are the most promising techniques to ensure the prototype affordable and scalable production.

The thermochromic smart tag (TCST) can be designed to support an image elusive to a brand of the STB. In this case, it is important that the resulting dispersion can respect a pattern. Moreover, for the activation of the TC ink, it is also important that the resulting film is uniform, so that the heat reaches the TC layer uniformly. Finally, it is necessary that the resulting film can induce a stable thermal gradient between the substrate and the area where the dispersion is deposited, guaranteeing a gradual activation of the TC ink.

In this context, the resulting films were evaluated regarding their visual uniformity, respect to the pattern at use, resulting thermal gradient and its stability over time.

### Screen-printed Carboxymethylcellulose (CMC)-based films on paper

Screen-printed CMC-based films showed signs of wrinkling, which could be related to the typical hygroscopic behaviour of paper. As CMC is water-based, the water molecules are adsorbed to the cellulose fibres surface, disrupting the paper's matrix.

Alongside with the poor printing quality and wrinkling effect observed on the printed CMC-based films on paper, when monitoring the heating dissipation of these films using a thermal camera, it was observed that they did not present a thermal gradient between the substrate and the surface of the films. For these reasons, CMC-based dispersions were not further considered in this study when aiming their application as thermal insulators capable of slowing down the colour transition of the TC layer patterned on the opposite side of the paper with the thermally insulating material.

### Screen-printed/ coated EC-based films on paper

In order to reduce the wrinkling effect promoted by hydrophilic behaviour, a paper with greater grammage (The Navigator Company^{™}, 120 g/m²) was used for the following samples under study. Besides, a hydrophobic binder solution, Ethylcellulose (EC) was used as substitute of CMC counterpart to try to overcome the issues related with water-based dispersions.

Some of the previous challenges persisted when using the formulated EC-based dispersions as alternative to the formulated water-based dispersions, although the wrinkling is not so pronounced. No thermal gradient was detected by the thermal camera of these samples, being discarded from these studies.

Overall, EC-based dispersions presented challenges concerning the deposition itself, as the wrinkling of the paper substrate occurred in both screen-printing and doctor blade coating, indicating that the dispersion was possibly still being absorbed by the paper. It was necessary to find a binder solution that could preferably selectively coat the paper substrate rather than impregnate it with the dispersion. For that purpose, polydimethylsiloxane (PDMS) was tested on paper.

### Polydimethylsiloxane-based films on paper

The first PDMS coating tests on paper were performed without adding functional material to the PDMS solution to find the best coating procedure to follow for the deposition of this material with a well-defined and uniform pattern, when using a mask. It was noticeable that the PDMS solution can retain its form and not be absorbed by the paper substrate as long as the coating process was carried out with the plate previously heated to its curing temperature (85 °C). By doing so, the resulting film consists of a defined pattern with no signs of wrinkling. However, the thermal camera did not detect the PDMS film. Thus, in the following trials the insulating particles were incorporated into the PDMS solution.

### Silica nanopowder dispersion

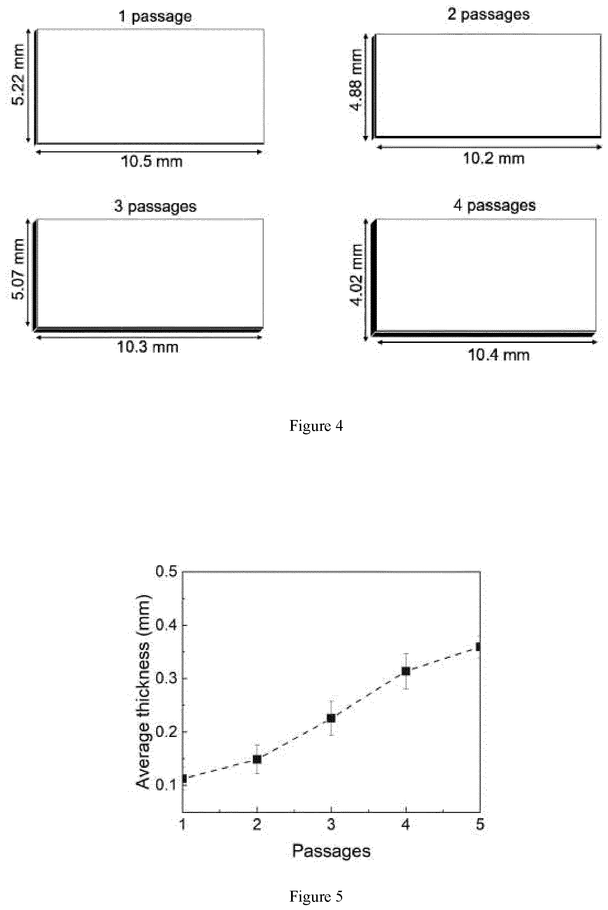

Figure 4 presents the results obtained for PDMS/silica dispersion (PS5) with increased the number of coating passages on paper. With this dispersion, it was possible to increase the number of passages without increasing the spilt dispersion or creasing the paper, while producing a thick film with well-defined design.

The relation between the obtained average thickness and the number of passages is described in Figure 5. The graph shows an increase in thickness with the increase in the number of passages, as 1 passage produces films with an average thickness of 0.112 mm of thickness and 5 passages produce films with an average thickness of 0.36 mm, making it clear that the number of passages can control the thickness of the film.

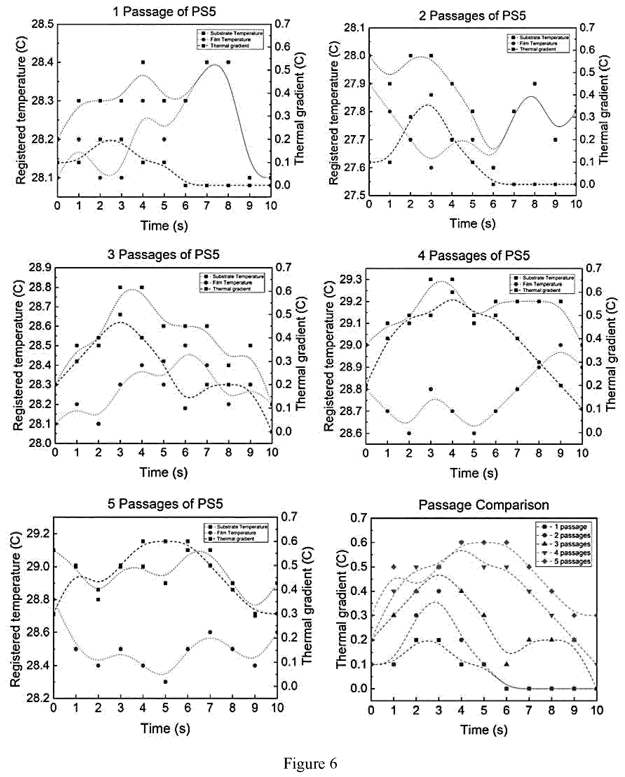

The thermal camera was able to detect the deposited pattern, revealing that it resulted in a thermal gradient between the substrate and the deposited film. Figure 6 shows the evolution of the thermal gradient for the PS5 films. Initially, as the thermal gradient rises as the film restricts heat flow from the heating plate to the substrate. As the heating continues, the thermal gradient decreases, as the surface with the film enters in thermal equilibrium with the rest of the substrate's area, showing that the restriction of heat from the insulating film becomes insufficient to contradict the heat coming the plate. PS5 films presented a thermal gradient through a period of 4 to 10 seconds.

### Cork microparticles dispersion

Considering the promising results observed with PDMS, the influence of alternative thermal insulator particles, such as cork microparticles, within the PDMS matrix was investigated.

**Erro! A origem da referência não foi encontrada.** shows the resulting deposition of the PCo10 dispersion. The samples present a wide and more homogeneous distribution of the cork microparticles throughout the deposited film compared to the DB _ECo10 samples. However, there was a visible heterogeneity of the dispersion and aggregation of the particles, possibly due to the separation of the microparticles from the binder solution. It is also noticeable that the deposition of this dispersion led to more significant spillage as the number of passages increased and worse pattern withhold performance compared to the PS5 samples, possibly due to the accumulation of still liquid-phase dispersion and existing gap between the paper and the mask.

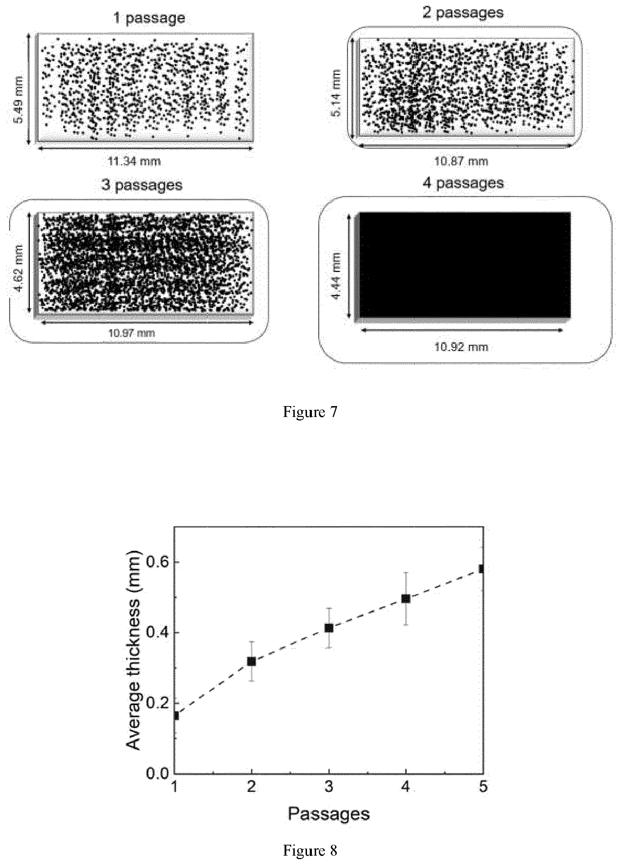

A direct relation between the thickness and the number of passages was verified, similarly to the PS5 samples (Figure 8). Moreover, for the same number of passages, PCo10 produced a thicker film than PS5, as 1 passage produces films with an average thickness of 0.165 mm and 5 passages produces films with an average thickness of 0.581 mm.

Similarly to the PS5 samples, the thermal camera was able to detect the pattern deposited with PCo10. It is also noted that the pattern shows a greater distinction between the film and the substrate, when in comparison to the PS5 samples, demonstrating a higher thermal gradient. This can be verified in **Erro! A origem da referência não foi encontrada.**, as for the same number of passages, there is a higher registered thermal gradient. Remarkably, PCo10 samples can establish superior thermal gradients when compared to PDMS/silica films, which is an indicative of the potential offered by cork microparticles as thermal insulator material. Additionally, these samples are able to keep the thermal gradient for extended periods before entering in equilibrium (from 15 to 30 seconds).

With all the options considered, even though PS5 samples presented a better printing quality, the resulting thermal gradient was low and unstable. The demonstrated superior thermal insulating performance of the PCo10 samples, which achieved higher and more stable thermal gradient values, make them the best results to be considered for further study and integration in the paper TCSTs.

### EXAMPLE 2

### PROTOTYPING AND CHARACTERIZATION OF THE PAPER TCST

**Erro! A origem da referência não foi encontrada.** shows a visual description of the process for developing the TCST, wherein 1° represents logo inkjet printing with home office inkjet printer, 2° represents sequential deposition of thermal insulator dispersion using doctor blade coating technique on the opposite side, 3° represents deposition of the TC layer on the patterned logo, 4° represents laser cut of the cover on black paper, and 5° represents the assembly of the sample with the black cover and final prototype.

### Thermal barrier deposition

The deposition of the insulating dispersion aimed to create three gradual colour activation levels within each area defined by TC ink's transition temperature (see Figures 2A-C). Figure 11 shows how the deposition was schematised according to these conditions. The number of layers was chosen so that the three levels would create different and distinguishable thermal gradients, enabling a gradual colour change of TC layer when continuously heated above its temperature transition.

As seen in Figure 12, the thermal insulator dispersion was deposited on the verse of paper previously printed with the desired logo. Figure 12 shows how the resulting film appeared to be even and withheld the pattern.

### TC ink deposition

The side of the paper with the printed logo was subjected to a UV treatment for 30 minutes prior to the deposition of the commercially available water-based TC inks to overcome the hydrophobic surface of the inkjet printed pattern. The samples were treated through 15-minute UV treatment in between depositions.

### Analysis of the prototype performance

When the tag was placed on a heating plate at 30 °C, the heating promoted the colour changing from black to transparent, while evidencing the logo pattern beneath the TC film. It is noticeable that each segment would slowly activate, compared to the typical instantaneous behaviour of TC ink, showing that the deposited thermal insulating film aids in promoting the intended gradual colour transition, which is slower in the areas composed of thicker insulating films.

An alternative design was adopted for the tag prototype by removing the printed logo from the paper and depositing the TC film directly instead. A better adhesion of the TC film is observed when adopting this type of design, since it deposited directly on the paper's surface, however the TC ink still did not produce a uniform film, possibly due to the paper's hydrophobicity (Figures 13A-C).

For both designs, the area defined by ink with transition temperature of 47 °C showed evidenced a more gradual temperature, possibly due to the fact that high transition temperature led to a lower influence of the room temperature on the activation.

As shown in Figures 14A-C, the segments required some time (2 to 3 minutes) to be activated with the heating plate at 60 °C.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. Composite comprising at least one coating on at least a portion of a first surface, and at least one leuco dye on at least a portion of a second surface, wherein said coating comprises at least one binder and at least one insulating material, said at least one insulating material, preferably in the form of particles, being at a ratio from 85:15 to 98:2 (w/w) and having a thickness from 0.09 mm to 0.8 mm.

2. Composite according to claim 1, comprising at least two coatings on at least two portions of said first surface, preferably positioned in a pattern, wherein the at least two coatings have a different thickness between them, preferably wherein the thickness of the first coating is at least 0.09 mm thicker than the second coating.

3. Composite according to claim 1 or 2, comprising at least two leuco dyes on at least two portions of said second surface, preferably positioned in a pattern, each of said at least two leuco dyes comprising a different transition temperature, the temperature of the first leuco dye being at least 4 °C higher than the second leuco dye.

4. Composite according to any one of claims 1 to 3, wherein said leuco dye reversibly changes between a visibly colored state and a substantially colorless state and comprises a transition temperature from 26 °C to 60 °C, preferably from 27 °C to 50 °C.

5. Composite according to any one of claims 1 to 4, wherein said binder is selected from the list: an acrylic polymer, a polyurethane, a polyamide, a rubber resin, a modified resin, a hydrocarbon resin, an alkyd, an organosilicon polymer, a cellulose derivative, or any combination thereof.

6. Composite according to any one of claims1 to 5, wherein said insulating material is in the form of particles and is selected from the list: silica nanoparticles, alumina nanoparticles, titania nanoparticles, cork particles, wood particles, polystyrene, cellulose nanoparticles, cellulose microfibers, cellulose nanofibers, natural fibers, or any combination thereof.

7. Composite according to any one of claims 1 to 6, wherein said composite is selected from the list: paper, wood, fiber, metal, glass, polymeric substrate, ceramic, plastic, thermoplastic materials, thermoset materials, textile, preferably paper, or any combination thereof.

8. Temperature sensor comprising the composite according to any one of claims 1 to 7.

9. Method for coating a composite according to any one of claims 1 to 8, comprising the steps of:
a) applying at least a first polymeric mask with a desired pattern on said first surface;
b) contacting said first surface with at least one binder and at least one insulating material, preferably in the form of particles at a ratio from 85:15 to 98:2 (w/w);
c) applying at least a first polymeric mask with a desired pattern on said second surface; and
d) contacting said second surface with at least one leuco dye.

10. Method according to claim 9, wherein said contacting from steps b) and/or d) comprises blade coating, spraying, spreading, casting, rolling, adhering, curing, printing, or any combination thereof.

11. Method for determining if an article has been exposed to a preselected temperature threshold, comprising:
a) placing the composite according to any one of claims 1 to 8, on a surface of said article; and
b) visual detection of a color shift, preferably a gradual color shift, or absence of a color change.

12. Method according to claim 11, wherein said visual detection of a color shift indicates that said article was exposed to said temperature threshold, and absence of a color change indicates that said article was not exposed to said temperature threshold.

13. Article comprising the composite according to any one o claims 1 to 8, wherein said article is an electronic device, a house appliance, a lens, a package, a cable, a charger, a wall, a window, or any combination thereof.

14. Use of the composite according to any one of claims 1 to 8, preferably the temperature sensor of claim 8 or the article of claim 13 for monitoring superficial temperature of a surface.

15. Use of the composite according to any one of claims 1 to 8, preferably the temperature sensor of claim 8 or the article of claim 13 in electronic devices, house appliances, lenses, packages, cables, chargers, walls and windows.
